# EUROPEAN PATENT SPECIFICATION

(11) **EP 3 936 836 B1**
(45) Date of publication and mention of the grant of the patent: **29.10.2025**
(21) Application number: 20425024.5
(22) Date of filing: 07.07.2020
(51) Int. Cl.: G01G 11/04, B65G 35/00

(54) **METHOD AND MEASUREMENT KIT FOR WEIGHING CONVEYOR BELTS**
VERFAHREN UND MESSKIT FÜR WIEGENDE FÖRDERBÄNDER
PROCÉDÉ ET KIT DE MESURE POUR PESER DES COURROIES DE CONVOYEUR

(43) Date of publication of application: 12.01.2022
(73) Proprietor: TECNO S.P.A. SOCIETA' BENEFIT, 80121 Napoli (IT)
(72) Inventor: Beneduce, Mauro, 80048 Sant'Anastasia (Napoli) (IT); Camerlingo, Giuseppe, 83053 Sant'Andrea di Conza (Avellino) (IT); Lombardi, Giovanni, 80121 Napoli (IT)
(74) Representative: Tansini, Elio Fabrizio

(56) References cited:
- CA-A1- 2 460 650
- US-B1- 6 317 656
- US-B2- 7 193 162

## Description

The present invention relates to a measurement method and a kit for weighing conveyor belts for the transport of material.

The present invention relates, preferably but not limited to, the weighing of conveyor belts for the transport of aggregates. In other words, the present invention finds application for the transport of different types of material with particular attention to the transport of aggregates.

To date, several methods are known for quantifying the material transported on a conveyor belt which exploit devices such as, for example, belt weights (comprising an encoder and load cells) or volumetric scanners.

For example, if an encoder is installed on the belt to read the transport speed, the same would be coupled to a load cell system which allows to know the weight on the belt instant by instant and, integrating with the speed of the belt measured by the encoder, allows to know the flow rate of the belt. This system leads to high structural complexity as well as high installation costs and subsequent maintenance costs.

Similarly, the use of a volumetric (albeit accurate) scanner leads to exorbitant costs both in terms of installation and maintenance.

Furthermore, systems equipped with a volumetric scanner exhibit high variability in the results obtained in the light of the environmental parameters of the environment in which they are installed (not foreseeable).

Moreover, some equipment comprise means to measure the electrical energy consumed by the motor powering the conveyor belt and a calibration formula to convert the motor energy consumption to tons per hour of raw material transported by the equipment. However, these currently available systems require an invasive installation phase with a mechanical intervention and an electrical intervention that requires a fairly long shutdown. An example of such solution is show in document US 7 193 162 B2 and in document CA 2 460 650 A1.

In other words, a disadvantage of the known solutions is due to the high plant costs deriving both from the installation thereof and possible shutdowns due to maintenance of the devices described above.

The technical task of the present invention is therefore to provide a measurement method and a kit for weighing conveyor belts which are able to overcome the drawbacks arisen from the known art.

An object of the present invention is to provide a measurement method and a kit for weighing conveyor belts which allow to reduce plant costs and plant downtime compared to the traditional solutions.

A further object of the present invention is to provide a measurement method and a kit for weighing conveyor belts which allow to obtain an accurate weighing of the materials transported by the belt.

The specified technical task and the specified aims are substantially achieved by a measurement method and a kit for weighing conveyor belts, comprising the technical features set out in one or more of the appended claims. The dependent claims correspond to possible embodiments of the invention.

In particular, the present invention involves providing a method for weighing conveyor belts for the transport of material, preferably for the transport of aggregates, comprising the steps of preparing and installing a measurement kit configured to acquire and store electrical parameters of a motor of a conveyor belt and perform a calibration of the motor (i.e., of the conveyor belt). This calibration is carried out by acquiring the electrical parameters as a function of different load conditions of the conveyor belt, defining motor operating points as a function of the acquired electrical parameters and defining a characteristic curve of the motor as a function of the operating points.

The method involves quantifying the material transported by the belt according to the characteristic curve and the electrical parameters measured during a use of the conveyor belt.

The step of acquiring electrical parameters is accomplished by acquiring the values of the electric currents absorbed by the motor and comprises two steps. A first acquisition step is relative to an operation of the conveyor belt empty while a second acquisition step is relative to an operation of the conveyor belt loaded. The latter is accomplished by acquiring the electrical parameters as a function of the amount of known material circulating on said conveyor belt.

Finally, the second acquisition step is carried out by acquiring the operating parameters relating to 50%, 75% and 100% of the load of material circulating on the conveyor belt.

Advantageously, the use of the measurement kit allows to effectively define a characteristic curve of the electric motor which allows not having to exploit the known devices. In addition, the network analyser is easy to install, allowing both installation and maintenance costs to be reduced.

Advantageously, the reading of the electrical parameters allows, once the characteristic curve of the motor has been defined, to obtain precise results suitable for knowing the actual flow rate transported by the conveyor belt.

Furthermore, the present invention involves providing a measurement kit for weighing conveyor belts for the transport of material, preferably for the transport of aggregates, comprising a network analyser, installed or installable on a conveyor belt to acquire electrical parameters of the conveyor belt motor, a recording unit configured to store the electrical parameters acquired by the network analyser, and a processing unit configured to carry out a method above.

Further characteristics and advantages of the present invention will become more apparent from the exemplary, and therefore non-limiting, description of a preferred but not exclusive embodiment of a measurement method and a kit for weighing conveyor belts for the transport of material.

Such description will be set out hereinafter with reference to the accompanying drawings given only for illustrative and, therefore, non-limiting purpose, wherein:
- Figures 1A -1B are a schematic representation of different steps of the method object of the present invention;
- Figure 2 is a schematic representation of a further step of the method object of the present invention;
- Figure 3 is a schematic representation of a measurement kit object of the present invention.

With reference to the accompanying figures, the number 1 globally indicates a conveyor belt whose actual flow rate is to be known during a use of the same.

The present invention relates to a method for weighing conveyor belts 1 such as those for example represented in the accompanying figures.

The present invention relates, preferably but not limited to, the weighing of conveyor belts 1 for the transport of aggregates 2. In other words, the present invention finds application for the transport of different types of material (such as for example food products) with particular attention to the transport of aggregates 2.

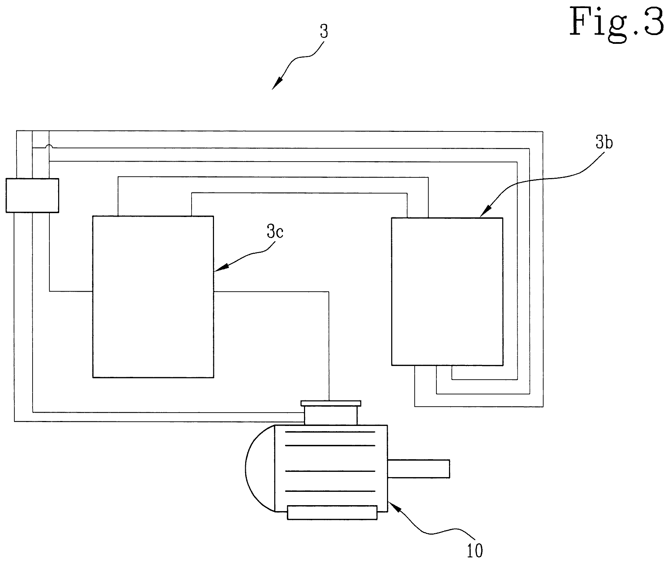

The method involves preparing and installing a measurement kit 3 configured to acquire and store electrical parameters of an electric motor 10 (schematically illustrated in figure 3) of a conveyor belt 1. Generally, the motor 10 is installed at the beginning or at the end of the conveyor belt 1. Preferably, the term measurement kit 3 is intended to mean a set of equipment (comprising a network analyser 3b connected or connectable to the electric motor 10) capable of acquiring and storing with a high frequency (for example up to three or four times per second) the electric parameters of the motor such as for example active power, power factor and current absorbed by the motor 10.

The method also involves calibrating the motor 10 (i.e., the conveyor belt 1). In other words, the method involves carrying out an electromechanical characterization of the motor 10 which moves the conveyor belt 1.

The calibration step involves acquiring the electrical parameters according to different load conditions of the conveyor belt 1. The term "load condition" refers to a different amount of material (i.e., aggregates 2) with which the conveyor belt 1 is loaded which can vary from 0% of the maximum load to 100% of the maximum load. The maximum load is defined by the nominal capacity of the belt and therefore by the maximum quantity which can be passed from a loading hopper 4.

The calibration step also involves defining operating points "F" as a function of the acquired electrical parameters. In other words, depending on the different load conditions, the method involves acquiring the respective electrical parameters through the measurement kit 3, thus defining the aforementioned operating points "F".

Finally, the calibration step involves defining a characteristic curve "C" of the motor 10 as a function of the operating points "F". Preferably, the step of defining the characteristic curve "C" is accomplished by interpolating therebetween the operating points "F" defined by each acquisition. Preferably, the step of acquiring the electrical parameters is accomplished by acquiring the values of the electrical currents absorbed "A" by the motor 10.

In other words, the step of calibrating the load passing on the conveyor belt 1 is carried out so as to obtain the different operating points "F" of the motor 10 intersecting the resistant torque applied to the motor 10 (i.e., to the conveyor belt 1) and the electrical absorptions "A" to generate the required driving torque.

Preferably, the acquisition step is carried out for specific acquisition times of the electrical parameters. In other words, for each load condition there is a specific acquisition time from which to obtain the above electrical parameters. In addition, the step of defining the operating points "F" is carried out by evaluating an average value of the electrical parameters acquired during the specific acquisition times. In other words, each operating point "F" is defined by an average value of the electrical parameters (i.e., of the electrical current absorbed "A") acquired during the specific acquisition time. Therefore, the characteristic curve "C" is constructed on the basis of the average values measured and will take into account a coefficient of determination relative to the measured data. Preferably, the acquisition step is accomplished by acquiring one electrical parameter per second during the specific acquisition time.

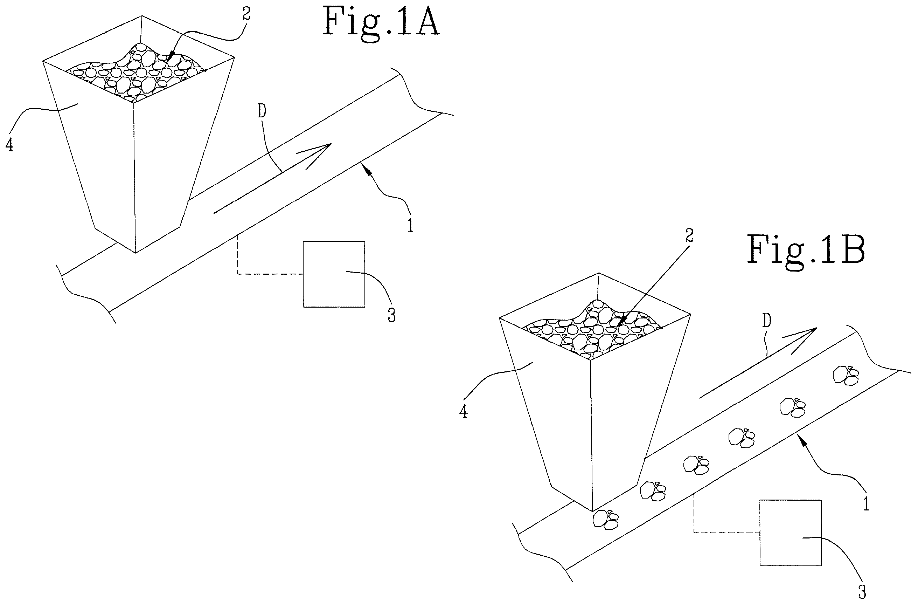

Preferably, the acquisition step is accomplished with a first acquisition step relative to an operation of the conveyor belt 1 empty (such as for example represented in figure 1A) and a second acquisition step relative to an operation of the conveyor belt 1 loaded (such as for example represented in figure 1B).

Preferably, the first acquisition step is accomplished by feeding the motor 10 of the conveyor belt 1 applying a zero load of material. That is, the conveyor belt 1 is operated empty so as to define a first operating point "F" which characterizes a zero flow rate "P" of the conveyor belt 1.

Preferably, the first acquisition step is carried out for an acquisition time of at least 5 minutes. Even more preferably, the first acquisition step is carried out by acquiring the electrical parameters for an acquisition time of at least 10 minutes.

That is, an empty test is performed consisting of feeding the motor 10, allowing it to rotate freely without applying any load on the conveyor belt 1. In this way there will be an extremely low resistant torque characteristic of the operating conveyor belt 1 (i.e., moved along the main movement direction "D" thereof) without material positioned thereon, such as for example represented in figure 1A.

Preferably, the second acquisition step is carried out by acquiring the electrical parameters as a function of the amount of known material circulating on the conveyor belt 1.

Preferably, this second acquisition step is carried out by acquiring the electrical parameters relating to 50%, 75% and 100% of the load of circulating material on the conveyor belt 1 (i.e., falling from the hopper 4). In other words, the second acquisition step is defined by a plurality of acquisitions relative to gradual load increases.

The second acquisition step can also be carried out for other values of the material load in order to obtain as precise a characteristic curve "C" as possible.

Preferably, for each amount of material transported (i.e., for each loading condition) a processing time consisting of the time taken by the conveyor belt 1 to process the material load is measured. In other words, for each loading condition, the time it takes the conveyor belt 1 to transport all the material contained within the hopper 4 is measured. In this way it is possible to define the specific operating points "F" according to the flow rate "P" of the material transported. Each processing time therefore defines the acquisition time of the specific acquisition step.

The present invention is based on the hypothesis that the motor 10 which moves the conveyor belt 1 does not undergo a speed adjustment by inverter but a variation of the resistant torque associated with an adjustment of the amount of material circulating on the conveyor belt 1.

Therefore, for each load condition the data relating to the % of material falling from the hopper 4 on the conveyor belt 1, the average electrical parameters (active power, power factor and absorbed current "A"), the amount of material passing on the conveyor belt 1 under the fixed conditions (the amount of material is known and weighed previously, for example on a weight bridge) and the time taken by the conveyor belt 1 to process a known amount of material are acquired.

Preferably, the acquisition step (i.e., the first and the second acquisition step) is carried out for different conveyor belt speed values. In this way, for the same amount of material to be processed, there will be shorter or longer times for emptying the hopper 4 and specific characteristic curves "C" will be obtained depending on the speeds at which the calibration was performed.

All the data therefore populate a database from which the characteristic curve "C" of the motor 10 is extracted, i.e., the link between the absorbed current "A" and flow rate "P" (generally evaluated in tons/hour).

After the aforementioned calibration step (i.e., characterization of the motor 10), the data are analysed by reconstructing (preferably by interpolation) the characteristic of the motor 10 in question.

In other words, an equation is obtained from the characteristic curve "C" to be implemented in the measurement kit 3 in order to reconstruct the flow rate "P" from the measured current.

Finally, the method involves a step of quantifying the material transported by the conveyor belt 1 according to the characteristic curve "C" and the electrical parameters measured during a use of the conveyor belt 1.

With reference to an application example of the method described above, once the measurement kit 3 is installed and configured, the calibration step is performed in which the absorption values are first recorded without the material on the conveyor belt 1 (then with the hopper 4 which does not release material on the conveyor belt 1) and, after about five minutes of recording, the hopper 4 is loaded with a known load. This step can take place first by performing a weighing of an empty lorry and then, once loaded, the lorry is weighed again so as to know the amount of material which will be loaded in the hopper 4. Once the hopper 4 has been filled, the total emptying time begins to be timed, coming to know how long it takes the conveyor belt 1 to dispose of a known amount of material.

For example, a number of tests such as those shown in the table below can be performed:

| Test No. | Average absorption | Flow Rate |
|---|---|---|
| 1 | 11.41 | 32 |
| 2 | 11.57 | 37 |
| 3 | 19.47 | 287 |
| 4 | 20.84 | 303 |
| 5 | 23.74 | 381 |
| 6 | 24.84 | 409 |
| 7 | 24.96 | 418 |
| 8 | 26 | 436 |

In which the average values of the absorbed currents "A" are reported in amperes while those of the flow rate "P" in tons/hour.

The sampling of the individual tests was carried out with one acquisition per second.

With reference, for example, to the second and eighth tests, fifty data were acquired for both, in which the maximum and minimum absorption values were 24.96 and 26.47 for the eighth test and 11.43 and 11.75 for the second test, respectively.

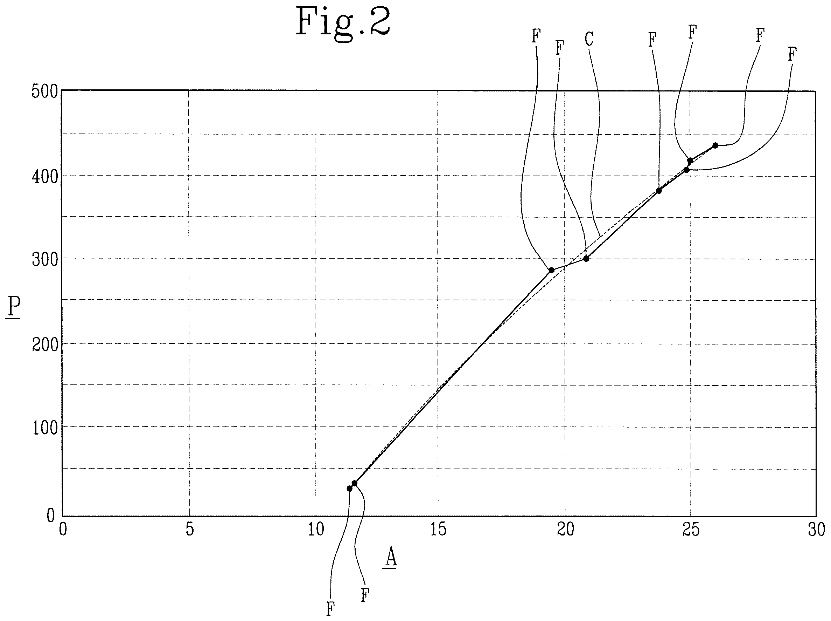

Figure 2 shows, in exemplary terms, the characteristic curve "C" obtained from the aforementioned data which shows a trend characterized by the equation (i.e., by the algorithm) y=-0.4116x^2+43.068x-405.72 and by the coefficient of determination R^2=0.9987.

The characteristic curve "C" thus obtained will allow, during a use of the conveyor belt 1, to know the values of the flow rate "P" as a function of the absorbed current "A" measured.

Advantageously, the use of the measurement kit 3 allows to effectively define a characteristic curve "C" of the electric motor 10 which allows not having to exploit the known devices. In addition, the network analyser 3 is easy to install, allowing both installation and maintenance costs to be reduced.

Advantageously, the reading of the electrical parameters allows, once the characteristic curve "C" of the motor 10 has been defined, to obtain precise results suitable for knowing the actual flow rate "P" transported by the conveyor belt 1.

The present invention further relates to a measurement kit 3 for weighing conveyor belts 1 for the transport of material, preferably for the transport of aggregates 2. The measurement kit 3 comprises a network analyser 3b, installed or installable on a conveyor belt 1 to acquire electrical parameters of a motor 10 of the conveyor belt 1. In particular, the network analyser 3b is configured to acquire the values of the active power, the power factor and the current absorbed "A" by the conveyor belt motor 10. Preferably, the network analyser is configured to measure and acquire the current absorbed "A" by the motor 10 during a use thereof.

The network analyser is connected or connectable to the motor 10 of the conveyor belt 1 by an amperometric transformer 3c.

Preferably, the network analyser 3b is configured to acquire with a high frequency (e.g., three or four times per second) the electrical parameters of the motor 10.

The measurement kit 3 further comprises a recording unit configured to store the electrical parameters acquired by the network analyser.

The measurement kit 3 comprises a processing unit configured to carry out a method such as that described above. The processing unit is also configured to define a database of electrical parameters acquired as a function of the specific load conditions of the conveyor belt 1.

Advantageously, the measurement method and kit 3 described above allow to provide the flow rate "P" of material transported by the belt without the continuous use of the load cells and encoder (or the volumetric scanner).

Advantageously, this solution entails a reduction in costs and plant downtime compared to the traditional solutions.

Advantageously, as underlined by the Applicant, the invention described above allows to obtain results having a 2.3% deviation with respect to the traditional systems, with reference to a day of monitoring of the conveyor belt 1.

## Claims

1. Method for weighing conveyor belts (1) for the transport of material, preferably for the transport of aggregates (2), comprising the steps of:
- preparing and installing a measurement kit (3) configured to acquire and store electrical parameters of a motor (10) of a conveyor belt (1);
- calibrating a motor (10) comprising the sub-steps of:
- acquiring said electrical parameters according to different load conditions of said conveyor belt (1);
- defining operating points (F) of the motor (10) according to the acquired electrical parameters;
- defining a characteristic curve (C) of the motor (10) according to said operating points (F);
- quantifying a flow rate (P) of material transported by said conveyor belt (1) as a function of said characteristic curve (C) and the electrical parameters measured during a use of said conveyor belt (1),
wherein said acquisition step is carried out with a first acquisition step, relative to an operation of the conveyor belt (1) empty, and with a second acquisition step relative to an operation of the conveyor belt (1) loaded,
said second acquisition step being accomplished by acquiring said electrical parameters as a function of the amount of known material circulating on said conveyor belt (1)
**characterised in that** said second acquisition step is accomplished by acquiring the operating parameters relating to 50%, 75% and 100% of the load of material circulating on the conveyor belt.

2. Method according to claim 1, wherein said step of acquiring the electrical parameters is accomplished by acquiring the values of the electrical currents absorbed (A) by the motor (10).

3. Method according to claim 1 or 2, wherein said acquisition step is carried out for specific acquisition times of the electrical parameters and wherein said step of defining the operating points is carried out by evaluating an average value of the electrical parameters acquired during the specific acquisition times.

4. Method according to claim 3, wherein said acquisition step is accomplished by acquiring at least one electrical parameter per second during said specific acquisition times, preferably three or four electrical parameters per second.

5. The method according to one or more of the preceding claims, wherein said first acquisition step is accomplished by actuating the motor (10) of the conveyor belt (1) by applying a zero load of material so as to define a first operating point (F) characterizing a zero flow rate (P) of the conveyor belt (1).

6. The method of claim 5, wherein said first acquisition step is accomplished by acquiring said electrical parameters for an acquisition time of at least 5 minutes, preferably for an acquisition time of at least 10 minutes.

7. Method according to one or more of the preceding claims , wherein for each amount of transported material a processing time employed by the conveyor belt (1) to process the material load is measured by defining specific operating points (F) relative to the conveyed material flow rate, each processing time defining an acquisition time of the specific acquisition step.

8. Method according to one or more of the preceding claims, wherein said step of defining the characteristic curve (C) is carried out by interpolating therebetween the operating points (F) defined by each acquisition.

9. Method according to one or more of the preceding claims, wherein said acquisition step is carried out for different speed values of the conveyor belt (1).

10. Measurement kit (3) for weighing conveyor belts (1) for the transport of material, preferably for the transport of aggregates (2), comprising:
- a network analyser (3b), installed or installable on a conveyor belt (1) to acquire electrical parameters of a motor (10) of a conveyor belt (1);
- a recording unit configured to store said electrical parameters acquired by the network analyser;
- a processing unit configured to carry out a method according to one or more of the preceding claims.

11. Measurement kit (3) according to claim 10, wherein said processing unit is further configured to define a database of said acquired electrical parameters according to the specific load conditions of the conveyor belt (1).

12. Measurement kit (3) according to claim 10 or 11, wherein said network analyser (3b) is connected or connectable to said motor (10) of the conveyor belt by an amperometric transformer (3c).

## Patentansprüche

1. Verfahren für wiegende Förderbänder (1) für den Transport von Material, vorzugsweise für den Transport von Zuschlagstoffen (2), umfassend die folgenden Schritte:
- Vorbereiten und Installieren eines Messkits (3), das ausgelegt ist, um elektrische Parameter eines Motors (10) eines Förderbands (1) zu erfassen und zu speichern;
- Kalibrieren eines Motors (10), umfassend die folgenden Unterschritte:
- Erfassen der elektrischen Parameter nach unterschiedlichen Lastbedingungen des Förderbands (1);
- Definieren von Betriebspunkten (F) des Motors (10) nach den erfassten elektrischen Parametern;
- Definieren einer Kennlinie (C) des Motors (10) nach den Betriebspunkten (F);
- Quantifizieren einer Fördermenge (P) des vom Förderband (1) transportierten Materials abhängig von der Kennlinie (C) und den während eines Gebrauchs des Förderbands (1) gemessenen elektrischen Parametern,
wobei der Schritt zum Erfassen mit einem ersten Erfassungsschritt in Bezug auf einen Betrieb des leeren Förderbands (1) und mit einem zweiten Erfassungsschritt in Bezug auf einen Betrieb des beladenen Förderbands (1) durchgeführt wird,
wobei der zweite Erfassungsschritt vollzogen wird, indem die elektrischen Parameter abhängig von der Menge bekannten Materials, das auf dem Förderband (1) zirkuliert, erfasst werden,
**dadurch gekennzeichnet, dass** der zweite Erfassungsschritt vollzogen wird, indem die Betriebsparameter, die sich auf 50 %, 75 % und 100 % der auf dem Förderband zirkulierenden Materiallast beziehen, erfasst werden.

2. Verfahren nach Anspruch 1, wobei der Schritt zum Erfassen der elektrischen Parameter vollzogen wird, indem die Werte der vom Motor (10) absorbierten elektrischen Stromstärken (A) erfasst werden.

3. Verfahren nach Anspruch 1 oder 2, wobei der Schritt zum Erfassen für spezifische Erfassungszeiten der elektrischen Parameter durchgeführt wird, und wobei der Schritt zum Definieren der Betriebspunkte durchgeführt wird, indem ein Durchschnittswert der während der spezifischen Erfassungszeiten erfassten elektrischen Parameter evaluiert wird.

4. Verfahren nach Anspruch 3, wobei der Erfassungsschritt vollzogen wird, indem mindestens ein elektrischer Parameter pro Sekunde, vorzugsweise drei oder vier elektrische Parameter pro Sekunde, während der spezifischen Erfassungszeiten erfasst wird bzw. werden.

5. Verfahren nach einem oder mehreren der vorhergehenden Ansprüche, wobei der erste Erfassungsschritt vollzogen wird, indem der Motor (10) des Förderbands (1) betätigt wird, indem eine Materialnulllast angewandt wird, sodass ein erster Betriebspunkt (F) definiert wird, der eine Fördermenge (P) von null des Förderbands (1) charakterisiert.

6. Verfahren nach Anspruch 5, wobei der erste Erfassungsschritt vollzogen wird, indem die elektrischen Parameter für eine Erfassungszeit von mindestens 5 Minuten, vorzugsweise für eine Erfassungszeit von mindestens 10 Minuten, erfasst werden.

7. Verfahren nach einem oder mehreren der vorhergehenden Ansprüche, wobei für eine jede Menge transportierten Materials eine Bearbeitungszeit, die das Förderband (1) benötigt, um die Materiallast zu bearbeiten, gemessen wird, indem spezifische Betriebspunkte (F) in Bezug auf die Fördermenge von befördertem Material definiert werden, wobei eine jede Bearbeitungszeit eine Erfassungszeit des spezifischen Erfassungsschritts definiert.

8. Verfahren nach einem oder mehreren der vorhergehenden Ansprüche, wobei der Schritt zum Definieren der Kennlinie (C) durch Interpolation der durch jede Erfassung definierten Betriebspunkte (F) miteinander durchgeführt wird.

9. Verfahren nach einem oder mehreren der vorhergehenden Ansprüche, wobei der Erfassungsschritt für verschiedene Geschwindigkeitswerte des Förderbands (1) durchgeführt wird.

10. Messkit (3) für wiegende Förderbänder (1) für den Transport von Material, vorzugsweise für den Transport von Zuschlagstoffen (2), umfassend:
- einen Netzwerkanalysator (3b), der auf einem Förderband (1) installiert oder installierbar ist, um elektrische Parameter eines Motors (10) eines Förderbands (1) zu erfassen;
- eine Aufzeichnungseinheit, die ausgelegt ist, um die vom Netzwerkanalysator erfassten elektrischen Parameter zu speichern;
- eine Verarbeitungseinheit, die ausgelegt ist, um ein Verfahren nach einem oder mehreren der vorhergehenden Ansprüche durchzuführen.

11. Messkit (3) nach Anspruch 10, wobei die Verarbeitungseinheit ferner ausgelegt ist, um eine Datenbank der erfassten elektrischen Parameter je nach den spezifischen Lastbedingungen des Förderbands (1) zu definieren.

12. Messkit (3) nach Anspruch 10 oder 11, wobei der Netzwerkanalysator (3b) mit dem Motor (10) des Förderbands mittels eines amperometrischen Transformators (3c) verbunden oder verbindbar ist.

## Revendications

1. Procédé pour peser des courroies de convoyeur (1) pour le transport de matériel, de préférence pour le transport d'agrégats (2), comprenant les étapes de :
- préparer et installer un kit de mesure (3) configuré pour acquérir et stocker des paramètres électriques d'un moteur (10) d'une courroie de convoyeur (1) ;
- étalonner un moteur (10), comprenant les sous-étapes de :
- acquérir lesdits paramètres électriques selon des différentes conditions de charge de ladite courroie de convoyeur (1) ;
- définir des points de fonctionnement (F) du moteur (10) selon les paramètres électriques acquis ;
- définir une courbe caractéristique (C) du moteur (10) selon lesdits points de fonctionnement (F) ;
- quantifier un débit (P) de matériel transporté par ladite courroie de convoyeur (1) en fonction de ladite courbe caractéristique (C) et des paramètres électriques mesurés lors d'une utilisation de ladite courroie de convoyeur (1),
dans lequel ladite étape d'acquisition est réalisée avec une première étape d'acquisition, relative à un fonctionnement de la courroie de convoyeur (1) vide, et avec une seconde étape d'acquisition relative à un fonctionnement de la courroie de convoyeur (1) chargée, ladite seconde étape d'acquisition étant accomplie en acquérant lesdits paramètres électriques en fonction de la quantité de matériel connu circulant sur ladite courroie de convoyeur (1),
**caractérisé en ce que** ladite seconde étape d'acquisition est accomplie en acquérant les paramètres de fonctionnement relatifs à 50 %, 75 % et 100 % de la charge de matériel circulant sur la courroie de convoyeur.

2. Procédé selon la revendication 1, dans lequel ladite étape d'acquisition des paramètres électriques est accomplie en acquérant les valeurs des courants électriques absorbés (A) par le moteur (10).

3. Procédé selon la revendication 1 ou 2, dans lequel ladite étape d'acquisition est effectuée pour des temps d'acquisition spécifiques des paramètres électriques et dans lequel ladite étape de définir les points de fonctionnement est effectuée en évaluant une valeur moyenne des paramètres électriques acquis pendant les temps d'acquisition spécifiques.

4. Procédé selon la revendication 3, dans lequel ladite étape d'acquisition est accomplie en acquérant au moins un paramètre électrique par seconde pendant lesdits temps d'acquisition spécifiques, de préférence trois ou quatre paramètres électriques par seconde.

5. Procédé selon une ou plusieurs des revendications précédentes, dans lequel ladite première étape d'acquisition est accomplie en actionnant le moteur (10) de la courroie de convoyeur (1) en appliquant une charge nulle de matériel de manière à définir un premier point de fonctionnement (F) caractérisant un débit nul (P) de la courroie de convoyeur (1).

6. Procédé selon la revendication 5, dans lequel ladite première étape d'acquisition est accomplie en acquérant lesdits paramètres électriques pendant un temps d'acquisition d'au moins 5 minutes, de préférence pendant un temps d'acquisition d'au moins 10 minutes.

7. Procédé selon une ou plusieurs des revendications précédentes, dans lequel pour chaque quantité de matériel transporté, un temps de traitement employé par la courroie de convoyeur (1) pour traiter la charge de matériel est mesuré en définissant des points de fonctionnement spécifiques (F) par rapport au débit de matériel transporté, chaque temps de traitement définissant un temps d'acquisition de l'étape d'acquisition spécifique.

8. Procédé selon une ou plusieurs des revendications précédentes, dans lequel ladite étape de définir la courbe caractéristique (C) est réalisée en interpolant entre eux les points de fonctionnement (F) définis par chaque acquisition.

9. Procédé selon une ou plusieurs des revendications précédentes, dans lequel ladite étape d'acquisition est réalisée pour différentes valeurs de vitesse de la courroie de convoyeur (1).

10. Kit de mesure (3) pour peser des courroies de convoyeur (1) pour le transport de matériel, de préférence pour le transport d'agrégats (2), comprenant :
- un analyseur de réseau (3b), installé ou installable sur une courroie de convoyeur (1) pour acquérir les paramètres électriques d'un moteur (10) d'une courroie de convoyeur (1) ;
- une unité d'enregistrement configurée pour stocker lesdits paramètres électriques acquis par l'analyseur de réseau ;
- une unité de traitement configurée pour mettre en œuvre un procédé selon une ou plusieurs des revendications précédentes.

11. Kit de mesure (3) selon la revendication 10, dans lequel ladite unité de traitement est en outre configurée pour définir une base de données desdits paramètres électriques acquis selon les conditions de charge spécifiques de la courroie de convoyeur (1).

12. Kit de mesure (3) selon la revendication 10 ou 11, dans lequel ledit analyseur de réseau (3b) est relié ou peut être relié audit moteur (10) de la courroie de convoyeur par un transformateur ampérométrique (3c).
